# EUROPÄISCHE PATENTSCHRIFT

(11) **EP 2 261 005 B1**
(45) Veröffentlichungstag und Bekanntmachung des Hinweises auf die Patenterteilung: **25.12.2019**
(21) Anmeldenummer: 10162289.2
(22) Anmeldetag: 07.05.2010
(51) Int. Cl.: B29C 49/42, B29C 49/58

(54) **Blasmaschine zum Erzeugen von Hohlkörpern aus erwärmten Vorformlingen**
Blowing machine for producing containers creating cavities from heated preforms
Souffleuse destinée à produire des corps creux à partir de préformes chauffées

(30) Priorität: 09.06.2009 DE 102009024408
(43) Veröffentlichungstag der Anmeldung: 15.12.2010
(73) Patentinhaber: Krones AG, 93073 Neutraubling (DE)
(72) Erfinder: Sperka, Wolfgang, 84130 Dingolfing (DE)
(74) Vertreter: Grünecker Patent- und Rechtsanwälte PartG mbB

(56) Entgegenhaltungen:
- DE-T2- 60 003 238
- DE-U1- 20 219 091
- US-A- 3 599 280
- US-A- 4 035 463
- US-A1- 2008 286 402
- US-B2- 7 165 956

## Beschreibung

Die Erfindung bezieht sich auf eine Blasmaschine zum Erzeugen von Hohlkörpern aus erwärmten Vorformlingen der im Oberbegriff von Anspruch 1 erläuterten Art.

Eine derartige Blasmaschine ist aus der EP 1 328 396 bekannt. Mit der bekannten Blasmaschine wird die Relativbewegung zwischen Blasdüse und Blasform, die zum Einführen des Vorformlings in die Blasform und zum Blasen notwendig ist, durch einen rein mechanischen Antrieb der Höhenbewegung erreicht. Der mechanische Antrieb enthält eine Kurvenrolle, die in Verbindung mit einer Steuerkurve die Höhenbewegung und Position der Blasdüse definiert. Die Kurvenrolle ist der Blasdüse und die Steuerkurve der Blasform zugeordnet, so dass durch die übliche Relativverdrehung um eine senkrechte Achse von Blasform und Blasdüse die Höhenbewegung vom Antrieb der Rotationsbewegung abgeleitet wird. Nachteilig an dieser Ausgestaltung ist die mangelnde Flexibilität des Antriebs, da die Steuerkurve örtlich und bezüglich des Ausmaßes der Bewegung fix ist.

Die US 2008/0286402 A1 offenbart ein Blasformsystem zur Herstellung von thermoplastischen Gefäßen.

Die DE 202 19 091 U1 offenbart eine elektromagnetische, koaxiale Spritzvorrichtung.

US 7165956 B2 offenbart alle Merkmale des Oberbegriffs des Anspruchs 1.

Der Erfindung liegt die Aufgabe zugrunde, eine Blasmaschine bereitzustellen, die eine größere Flexibilität im Hinblick auf die Höhenbewegung bietet.

Die Aufgabe wird durch die im Anspruch 1 angegebenen Merkmale gelöst.

Der erfindungsgemäße elektromagnetische Antrieb ist wesentlich universeller einsetzbar und auszugestalten, als dies der fixe mechanische Antrieb ist. Es können beispielsweise auf einfache Weise der Hub, d.h. der Betrag der Höhenbewegung, oder die Ansprechzeit oder dergleichen verändert werden.

Magnetspulen bei Blasformmaschinen wurden bisher lediglich zum Aufbringen der Anpresskraft zwischen Blasdüse und Blasform, d.h. rein statisch, verwendet, um dem Druck des Pressgases entgegenzuwirken. Eine derartige Verwendung ist aus der EP 1 572 435 bekannt.

Vorteilhafte Weiterbildungen der Erfindung sind den Unteransprüchen zu entnehmen. Bevorzugt ist wenigstens eine Magnetspule für einen vorbestimmten Hub vorgesehen, wobei die Rückkehrkraft durch die Schwerkraft aufgebracht wird. Es ist jedoch auch möglich, für jede Bewegungsrichtung jeweils eine Magnetspule einzusetzen.

Mit einem elektromagnetischen Antrieb ist es weiterhin problemlos möglich, verschiedene Hubhöhen zu verwirklichen, wobei für jede Hubhöhe wenigstens eine Magnetspule vorgesehen ist.

Schließlich kann in dem elektromagnetischen Antrieb auch der vorbestimmte Anpressdruck der Blasdüse an die Blasform verwirklicht werden.

Durch eine Feder kann ein lineares Verhältnis zwischen elektrischem Strom und Hub eingestellt werden.

In einer vorteilhaften Ausführungsform besteht die Blasdüse zumindest abschnittsweise aus ferromagnetischem Material. Besonders bevorzugt sind an der Blasdüse Dauermagneten angebracht. Das ferromagnetische Material oder die Dauermagneten bewirken eine Minderung einer zum Antrieb benötigten Kraft. Somit benötigen die Magnetspulen weniger Energie.

Ein Ausführungsbeispiel der Erfindung wird nachfolgend anhand der einzigen Figur näher erläutert.

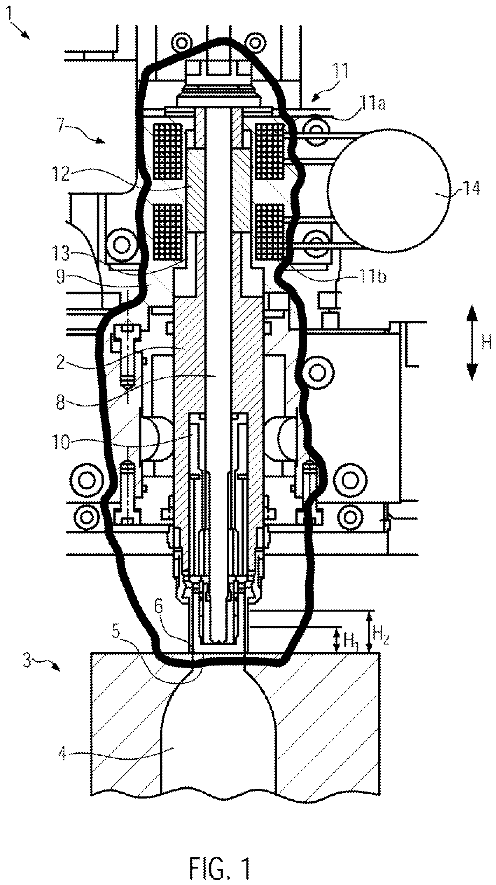

Fig. 1 zeigt im Teilschnitt eine Blasformmaschine 1, von der hier nur die Blasdüse 2 und die Blasform 3 dargestellt sind. Die Blasform 3 ist in herkömmlicher Weise geteilt, mit einem Formhohlraum 4 und eine nach oben weisende Öffnung 5, die der Blasdüse 2 gegenüberliegt, aufgebaut. In den Hohlraum 4 und die Öffnung 5 wird ein nicht gezeichneter Vorformling eingesetzt, der über die Blasdüse 2 zur durch den Formhohlraum 4 definierten Form ausgeblasen wird.

Die Blasdüse 2 ist rohrförmig ausgebildet und enthält an ihrem unteren Ende eine Blasöffnung 6, die der Öffnung 5 gegenüberliegt. Die Öffnungen 5 und 6 werden zum Einbringen des Vorformlings in einen vorbestimmten Abstand und zum Blasen in einen Anpresskontakt gebracht. Diese Bewegung erfolgt über eine Höhenbewegung H in Richtung des Doppelpfeils der Blasdüse 2. Diese Höhenbewegung H wird über einen Antrieb 7 verwirklicht.

Bis auf den Antrieb 7 ist die Blasdüse 2 herkömmlicher Art, d.h. sie enthält einen üblichen Reckdorn 8, der relativ zur Blasdüse 2 beweglich ist, eine Lagerung und Führung 9 für die Bewegung der Blasdüse 2 in Richtung des Doppelpfeils H, die notwendigen Anschlüsse 10 für Blasgas, und die eigentliche Düse, die am unteren Ende angeordnet ist, und dergleichen.

Der elektromagnetische Antrieb 7 enthält wenigstens eine Magnetspule 11, die sich ringförmig um die Blasdüse 2 erstreckt, und einen an der Blasdüse 2 befestigten Magnetkörper 12, der bevorzugt gleichzeitig als Führung der Blasdüse 2 in einer Gleitführungsbohrung 13 der Halterung 9 dient. Der Magnetkörper kann als gesondertes Teil aus ferromagnetischem Material ausgebildet sein oder aus der zumindest abschnittsweise aus ferromagnetischem Material bestehenden Blasdüse bestehen oder als Dauermagnet ausgebildet sein.

Im dargestellten Ausführungsbeispiel sind zwei in Richtung H übereinanderliegende Magnetspulen 11a, 11b vorgesehen, wobei die Magnetspule 11a zum Anheben und die darunterliegende Magnetspule 11b zum Absenken der Blasdüse 2 bei einer Bewegung über einen einzigen Hub H₁ dient.

Weitere Magnetspulen können vorgesehen sein, um abweichende Hubhöhen zu verwirklichen. So kann beispielsweise eine dritte Magnetspule oberhalb der ersten Magnetspule 11a vorgesehen sein, die einen zweiten, höheren Hub H₂ verwirklicht, wobei für beide Hube die untere Magnetspule 11b die Rückkehr in die in Fig. 1 gezeichnete Absenkstellung bewirkt.

Alle Magnetspulen 11 sind über eine Stromquelle 14 versorgt und mit einer nicht gezeigten Steuereinrichtung versehen, die den Takt und die Beaufschlagung der jeweils benötigten Magnetspule steuert.

Weiterhin kann auch der Anpressdruck zwischen den beiden Öffnungen 5, 6 elektromagnetisch bewirkt werden, was beispielsweise durch eine zusätzliche Spule im Bereich der Öffnungen 5, 6 oder durch die untere Spule 11b verwirklicht werden kann.

Weiterhin kann eine nicht gezeichnete Feder vorgesehen sein, die der Magnetkraft entgegenwirkt, um ein lineares Verhalten zwischen elektrischem Strom und Hub zu bewirken.

In Abwandlung des beschriebenen und gezeichneten Ausführungsbeispiels kann der erfindungsgemäße elektromagnetische Antrieb auch bei anders konstruierten Blasdüsen und/oder Blasformen eingesetzt werden.

Es wäre denkbar, ein derartiges System nicht nur für die Blasdüse einzusetzen. Es können derartige magnetische Antriebe auch für alle Elemente eingesetzt werden, die den Formhohlraum der Blasform in einen geschlossenen Zustand überführen. Eines dieser Elemente stellt einen nicht gezeichneten, separat zustellbaren Boden dar. Der Boden schließt einen Raumbereich ab, der gegenüber dem der Blasdüse liegt. Ein weiteres dieser Elemente ist der Reckdorn. Vorteilhaft für den Reckdorn wäre eine durch die Steuerung anpassbare Reckkraft, die über den Stromfluss in den Magnetspulen einstellbar ist. Theoretisch wäre ein auch ein derartiger elektromagnetischer Antrieb für Teile für Formhälften der Blasform denkbar.

In einer vorteilhaften Ausführungsform werden mindestens zwei dieser Elemente über einen derartigen elektromagnetischen Antrieb gesteuert.

## Patentansprüche

1. Blasmaschine zum Erzeugen von Hohlkörpern aus erwärmten Vorformlingen mit mindestens einer Blasform (3) und mindestens einer Blasdüse (2), die über einen Antrieb (7) relativ zueinander höhenbewegbar sind, wobei der Antrieb (7) elektromagnetisch erfolgt,
**dadurch gekennzeichnet, dass**
der elektromagnetische Antrieb (7) wenigstens eine Magnetspule (11) enthält, die sich ringförmig um die Blasdüse (2) erstreckt, und einen an der Blasdüse (2) befestigten Magnetkörper (12).

2. Blasmaschine nach Anspruch 1, **dadurch gekennzeichnet, dass** der elektromagnetische Antrieb (7) die wenigstens eine Magnetspule (11) für einen vorbestimmten Hub (H) enthält.

3. Blasmaschine nach Anspruch 2, **dadurch gekennzeichnet, dass** eine Mehrzahl unterschiedlicher Hubhöhen (H₁, H₂) durch jeweils die wenigstens eine Magnetspule (11) zu verwirklichen ist.

4. Blasmaschine nach einem der Ansprüche 1 bis 3, **dadurch gekennzeichnet, dass** ein vorbestimmter Anpressdruck zum Anpressen der Blasdüse (2) an die Blasform (3) elektromagnetisch aufgebracht wird.

5. Blasmaschine nach einem der Ansprüche 1 bis 4, **dadurch gekennzeichnet, dass** eine der Magnetkraft entgegengeschaltete Feder für ein lineares Verhältnis zwischen elektrischem Strom und Hub (H) vorgesehen ist.

6. Blasmaschine nach einem der Ansprüche 1 bis 5, **dadurch gekennzeichnet, dass** der elektromagnetische Antrieb (7) ferromagnetisches Material oder wenigstens einen Dauermagneten umfasst.

## Claims

1. Blow molding machine for producing hollow bodies from heated preforms with at least one blow mold (3) and at least one blow nozzle (2) which can be vertically moved relative with respect to each other via a drive (7), wherein the drive (7) is accomplished electromagnetically,
**characterized in that**
the electromagnetic drive (7) contains at least one magnet coil (11) which extends annularly around the blow nozzle (2) and a magnet body (12) fixed to the blow nozzle (2).

2. Blow molding machine according to claim 1, **characterized in that** the electromagnetic drive (7) contains the at least one magnet coil (11) for a predetermined stroke (H).

3. Blow molding machine according to claim 2, **characterized in that** a plurality of different lengths of stroke (H₁, H₂) is to be realized by the at least one magnet coil (11) each.

4. Blow molding machine according to one of claims 1 to 3, **characterized in that** a predetermined force of pressure for pressing the blow nozzle (2) against the blow mold (3) is applied electromagnetically.

5. Blow molding machine according to one of claims 1 to 4, **characterized in that** a spring acting against the magnetic force is provided for a linear relation between the electric current and the stroke (H).

6. Blow molding machine according to one of claims 1 to 5, **characterized in that** the electromagnetic drive (7) comprises a ferromagnetic material or at least one permanent magnet.

## Revendications

1. Machine de moulage par soufflage pour produire des corps creux à partir de préformes échauffées, comprenant au moins un moule de soufflage (3) et au moins une buse de soufflage (2), qui peuvent être déplacés relativement en hauteur l'un par rapport à l'autre, par l'intermédiaire d'un entrainement (7), l'entrainement (7) étant effectué par voie électromagnétique,
**caractérisée en ce que**
l'entrainement électromagnétique (7) renferme au moins une bobine magnétique (11), qui s'étend de manière annulaire autour de la buse de soufflage (2), et un corps magnétique (12) fixé à la buse de soufflage (2).

2. Machine de moulage par soufflage selon la revendication 1, **caractérisée en ce que** l'entrainement électromagnétique (7) renferme ladite au moins une bobine magnétique (11) pour une course de déplacement prédéterminée (H).

3. Machine de moulage par soufflage selon la revendication 2, **caractérisée en ce qu'**une pluralité de hauteurs de course différentes (H1, H2) peuvent être concrétisées respectivement par ladite au moins une bobine magnétique (11).

4. Machine de moulage par soufflage selon l'une des revendications 1 à 3, **caractérisée en ce qu'**une pression d'application prédéterminée pour appliquer la buse de soufflage (2) contre le moule de soufflage (3), est fournie par voie électromagnétique.

5. Machine de moulage par soufflage selon l'une des revendications 1 à 4, **caractérisée en ce qu'**il est prévu un ressort monté en opposition à la force magnétique, en vue d'obtenir un rapport linéaire entre le courant électrique et la course de déplacement (H).

6. Machine de moulage par soufflage selon l'une des revendications 1 à 5, **caractérisée en ce que** l'entrainement électromagnétique (7) comporte du matériau ferromagnétique ou bien au moins un aimant permanent.
